# EUROPEAN PATENT SPECIFICATION

(11) **EP 2 669 185 B1**
(45) Date of publication and mention of the grant of the patent: **08.05.2019**
(21) Application number: 13169020.8
(22) Date of filing: 23.05.2013
(51) Int. Cl.: B64C 1/06, B64C 3/18

(54) **A securing plate and aircraft structure**
Sicherungsplatte und Flugzeugstruktur
Plaque de fixation et structure d'avion

(30) Priority: 28.05.2012 GB 201209439
(43) Date of publication of application: 04.12.2013
(73) Proprietor: Airbus Operations Limited, Bristol BS34 7PA (GB)
(72) Inventor: Fonseka, Christopher, BRISTOL, Bristol BS99 7AR (GB)
(74) Representative: Paton, David William

(56) References cited:
- WO-A2-2011/003844
- WO-A2-2012/042246
- US-A1- 2011 089 291

## Description

The present invention relates to an aircraft structure and, more particularly, to an aircraft structure having a reinforcing stringer and a securing plate for use herewith.

An aircraft structure, such as a wing or fuselage, usually comprises a lightweight frame covered in a skin. The skin is reinforced by elongate strengthening elements known as stringers. The stringers are attached to the inside of the skin and provide support to the aircraft structure, especially critical during takeoff, flight, and landing, instances when the aircraft structure may be subjected to particularly high loads.

In large aircraft wing structures, such as those associated with the large aircraft commonly used for passenger and freight flight, a large number of stringers are required to maintain the shape and structural integrity of the aircraft structure. It is therefore desirable to minimise the mass of the stringers so that the performance of the aircraft is optimised and the efficiency of the aircraft is improved. However, it is important that the materials used in the manufacture of the stringers are strong, stiff and able to withstand high load conditions to provide the required level of structural reinforcement.

It is known from the prior art to construct the stringers from composite materials, such as carbon fibre, which have a high strength and stiffness but are also lightweight. However, a common problem with composite materials is that their peel strength is weak. Furthermore, there is a large shear loading action present at the stringer 'run-out', where the stringer terminates, particularly during aircraft ascent and descent, and during turbulence, when the wings tend to flex the most. This shear loading action is the critical design sizing condition for the stringer 'runout'. These peel and shear loading actions can result in disbonding, and subsequent separation, of the stringer from the aircraft skin, ultimately compromising the structural integrity of the aircraft structure.

A panel assembly comprising a panel, a stiffener and a fitting is described in WO2012/042246.

The present invention seeks to provide an aircraft structure comprising one or more stringers configured to substantially alleviate or overcome the problems mentioned above, and a securing plate for use with such an aircraft structure.

Accordingly, the present invention provides a securing plate for clamping an end of a stringer to a surface of an aircraft structure, wherein the plate is metallic and comprises a first recess formed partially through the thickness of the plate and configured so that the thickness of the plate incrementally reduces towards an end of the plate by a plurality of plate steps.

Preferably, the securing plate comprises an upper surface and a lower surface, wherein the first recess is formed in the lower surface of the plate. The first recess may be formed in the entire lower surface of the plate.

In one preferred embodiment, the securing plate comprises a second recess that is formed into the upper surface of the plate.

Preferably, the securing plate comprises a slot formed through the thickness of the plate at an end thereof. The slot may be located centrally into said edge of the plate.

The plate may be integrally machined and the plurality of plate steps may be formed by milling.

The present invention also provides an aircraft structure comprising a skin having an inner surface, and a stringer extending in a longitudinal direction of the aircraft structure, the stringer comprising a stringer foot bonded to the skin inner surface and a web extending from the stringer foot and away from the skin inner surface, wherein the aircraft structure further comprises a metallic securing plate overlying a portion of the stringer foot at an end of the stringer and which is attached to the skin, the metallic securing plate comprising a first recess formed partially through the thickness of the plate and configured so that the thickness of the plate incrementally reduces towards an end of the plate by a plurality of plate steps.

Preferably, the securing plate includes any of the above-described features.

In a preferred embodiment, the securing plate is attached to the stringer foot. The securing plate may overlie the stringer foot and the skin inner surface that is adjacent to the stringer foot and the securing plate may be positioned so that a portion of the stringer foot is positioned in the first recess.

In a preferred embodiment, the stringer foot comprises a plurality of laminated plys of composite material. The thickness of the stringer foot may decrease towards an end of the stringer foot by incremental reduction in the number of plys, forming a plurality of stringer ply steps. Preferably, the plurality of ply steps are configured to correspond to the plurality of plate steps of the securing plate so as to interface with the plurality of plate steps when the securing plate is positioned on the stringer foot.

Preferably, the securing plate is mechanically secured to the stringer foot and/or skin inner surface. An interfay material may be disposed between the securing plate and the stringer foot and/or the skin inner surface.

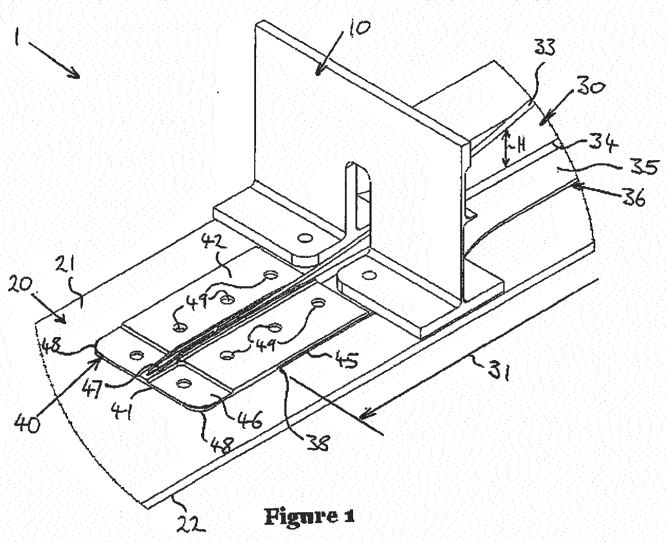

The above, as well as other aspects, objects, features and advantages of the present invention, will be better understood through the following illustrative and non-limiting detailed description, with reference to Figures 1 - 5 of the appended schematic drawings showing currently preferred embodiments of the invention, in which:
Figure 1 show's a perspective view of a stringer run-out and securing plate of the invention on a portion of an aircraft skin;
Figure 2 shows an enlarged view of a portion of the stringerrun-out of Figure 1;
Figure 3 shows a side view of a portion of the stringer run-out of Figure 1;
Figure 4 shows a side view of the securing plate of Figures 1-2; and
Figure 5 shows a side view of the securing plate of Figure 4, in position on a portion of the stringer run-out.

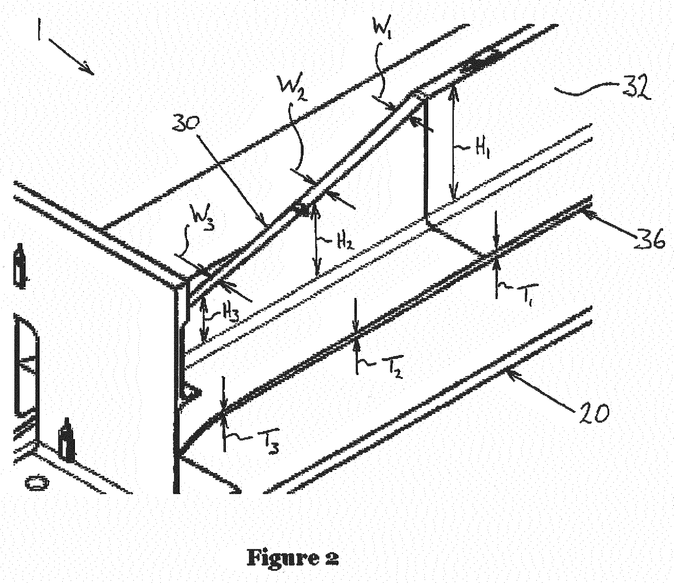

Figures 1 and 2 show perspective views of a portion of an aircraft structure 1, for example, an aircraft wing or fuselage, and comprises a frame 10 across which is provided an aircraft skin 20. The aircraft skin 20 forms the outer shell of the aircraft structure 1, and comprises a skin inner surface 21 and a skin outer surface 22. The skin inner surface 21 is known within the aircraft industry as the Inner Mould Line or 'IML', although will be referred to hereafter as the skin inner surface 21, A stringer 30 is bonded to the skin inner surface 21 to provide increased strength and stiffness to the aircraft structure 1 and comprises an elongate member that extends in the longitudinal direction of the aircraft structure d. The stringer 30 comprises a web 32 having a top edge 33 and a bottom edge 34, and a flange 35 extending generally perpendicularly from the bottom edge 34 at each side of the web 32 along the length thereof, so that the cross-sectional profile of the stringer 30 is an inverted 'T' shape. The stringer 30 is manufactured from two 'L' shaped' sections of composite material that are glued back-to-back to form the inverted 'T' shape. The composite material, such as carbon fibre, is formed from a plurality of layers of interwoven fibres, also known as 'plys'. The flanges 35 on each side of the web 32 together form the stringer foot 36 which is bonded to the skin inner surface 21.

A stringer "run-out" portion 31 is formed at one distal end 38 of the stringer 30 and is configured to diffuse out the loads at the stringer run-out 31 and avoid localised stress concentrations on the skin 20. At the stringer run-out 31, the height of the web 32, defined as the distance between the top and bottom web edges 33, 34, is tapered towards the first distal end 38. This is shown in Figure 2 by increasingly smaller dimensions H₁, H₂, and H₃. Also at the stringer run-out 31, the thickness W of the web 32, defined as the distance between opposite vertical sides of the web 32 in a direction generally perpendicular to the web height H, is tapered towards the first distal end 38. This reducing thickness W of the web 32 is shown in Figure 2 by increasingly smaller dimensions W₁, W₂ and W₃.

In addition to the above, the thickness T of the stringer foot 36 is also tapered 4 towards the first distal end 38, at the stringer run-out 31, to comprise a tapered stringer foot section. This reducing thickness T of the stringer foot 36 is shown in Figure 2 by increasingly smaller dimensions T₁, T₂ and T₃.

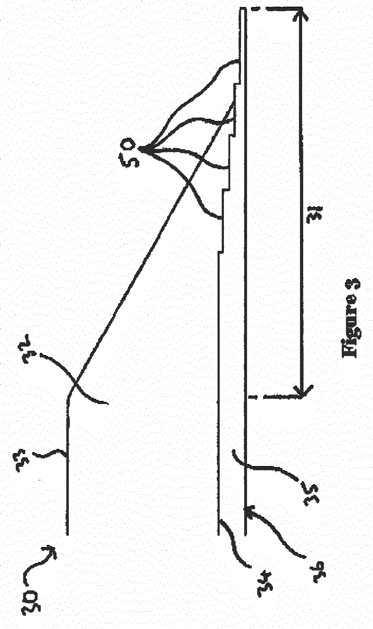

The tapering of the thickness W of the web 32 and the tapering of the thickness T 5 of the stringer foot 36 at the stringer run-out 31 is achieved by an incremental reduction in the number of laminate ply's that comprise the stringer 30, forming a plurality of ply steps 50 as shown in Figure 3, therefore, reducing the stiffness of the stringer 30 at the stringer run-out 31. Reducing the stringer 30 stiffness helps to ensure that the load in the stringer 30 is diffused out along the respective portion of the aircraft structure skin 20 at the stringer run-out 31 so that the risk of damage to the aircraft structure 1 is minimised. The gradual decrease in the structural stiffness of the stringer prevents localised stress concentrations and facilitates the gradual load transfer from skin 20 to stringer 30 at the run-out 31, reducing the amount of disbonding that occurs and propagates through the structure.

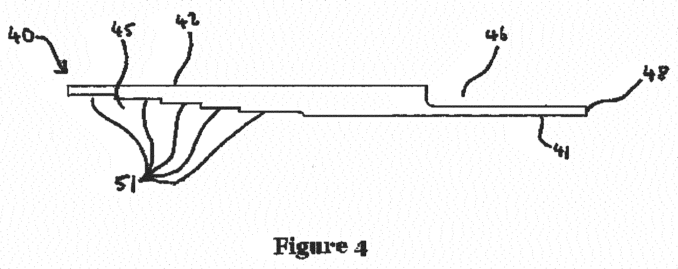

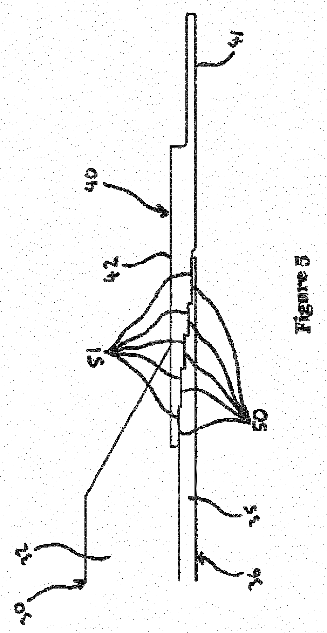

A securing plate or "finger plate" 40 according to a first embodiment of the invention is provided at the stringer run-out 31 and overlies the distal end 38 of the stringer foot 36 and the aircraft skin 20 to clamp the stringer foot 36 to the skin 20 and thereby prevent peeling of the skin 20 at the stringer run-out 31. The finger plate 40 is shown in more detail in Figure 4 and is rectangular in shape, with rounded corners 48, when viewed from above. The finger plate comprises a lower surface 41 and an upper surface 42. A first recess 45 is formed partially through the thickness of the finger plate 40 in the lower surface 41 at one end of the plate 40 and is configured so that the thickness of the finger plate 40 decreases incrementally towards said end by a plurality of plate steps 51, as shown in Figure 4. The finger plate 40 is metallic, and, therefore, may be manufactured by being integrally machined from a single piece of metal and the plurality of steps 51 may be formed by milling the first recess 45 into the lower surface 41 of the finger plate 40, allowing for accurate and high throughput manufacture. The depth of the first recess 45 corresponds to the thickness of the stringer foot 36 at the end of the stringer run-out 31, and the plurality of steps 51 are configured to interface with corresponding ply steps 50 of the stringer run-out to allow for the finger plate 40 to

be positioned so that the end of the stringer foot 36 is located in the first recess 45, as shown in Figure 5.

A central slot 47 is formed through the thickness of the finger plate 40 from the edge thereof that the first recess 45 is formed in. The end of the web 32 is slotted in the slot 47 to prevent lateral displacement of the stringer 30.

A second recess 46 is formed partially through the thickness of the finger plate 40 in the upper surface 42 at the end thereof that is remote to the first recess 45. This reduces the weight of the finger plate 40 but is not essential to the function of the invention.

Bolt holes 49 are included in the finger plate 40, allowing the finger plate 40 to be mechanically secured, by bolts, to the stringer foot 36 and aircraft skin 20. The fit of the bolts or other mechanical fasteners can be "clearance" fit or "interference" fit. This means for the latter the fastener diameter is slightly larger than the hole it 13 installed in. For the former, it means that the fastener diameter is slightly smaller than the hole it is installed in. Such mechanical fasteners are not limited to bolts within the scope of the invention and include any other mechanical fasteners, such as, for example, rivets.

An interfay material, such as a 'liquid shim', may also be provided between the finger plate 40 and the end portion, of the stringer foot 36, and/or between these portions and the skin 20, to provide a good fit therebetween with no gaps and toprevent ingress of air or moisture.

The finger plate 40 clamps the stringer run-out 31 to the aircraft skin 20, preventing disbonding of the stringer 30 from the inner surface 21 of the aircraft skin 20 when the stringer 30 is subjected to peeling loads. Since such disbonding in conventional aircraft structures initiates at the distal ends of the stringers, this configuration prevents the onset and propagation of stringer separation. Furthermore, the finger plate 40 provides an additional load path that helps to evenly spread the load transferred from the stringer 30 to the aircraft skin 20 at the stringer run-out 31. The stringer run-out 31 ply steps 50 fit snugly against the finger plate steps 51 so that a large surface area of the lower surface 41 of the finger plate 40 is in contact with the upper surface area of the stringer run-out 31,to further improve the clamping of the stringer 30 to the aircraft skin 20 and the uniformity of the load transfer compared to a conventional non-stepped, flat-bottomed, finger plate, which would only exert a clamping force on the edge of each step 50, rather than the whole upper surface of each ply of the end of the stringer run-out 31.

Although in the above-described embodiment the finger plate 40 has rounded corners 48, in alternative embodiments the corners 48 may be chamfered or square.

Although in the above-described embodiment the stringer foot 36 extends to the distal end of the web 32, in alternate embodiments (not shown) the stringer foot 36 may extend past the distal end of the web 32 so that the distal end of the stringer 30 is flat, which can aid attachment to the skin inner surface 21 and/or the finger plate 40.

Although in the above-described embodiment the first recess 45 is formed in an end of the finger plate 40, in an alternate embodiment (not shown) the first recess 45 may be formed remote from the ends of the finger plate 40. In a further embodiment (not shown) the first recess is formed into the entire lower surface of the plate.

Although in the above-described embodiment the finger plate 40 abuts the aircraft skin 20, in an alternate embodiment (not shown) the finger plate 40 may not overlie the end of the stringer run-out 31 and so does not abut the aircraft skin.

Although in the above-described embodiment the second recess 46 is formed in an end of the finger plate 40, in an alternate embodiment (not shown) the second recess may be formed, remote from the ends of the finger plate. In yet another embodiment (not shown) the second recess may be omitted entirely.

Although in the above-described embodiment the slot 47 is positioned centrally in the finger plate 40, in an alternate embodiment (not shown) the first slot may be positioned in a non-central position. In yet a further embodiment (not shown) the slot may be omitted entirely.

At will be appreciated that the term "comprising" does not exclude other elements or steps and that the indefinite article "a" or "an" does not exclude a plurality. Although claims have been formulated in this application to particular combinations of features, it should be understood that the scope of the invention is intended to include any combination of non-mutually exclusive features described above.

## Claims

1. A securing plate (40) for clamping an end of a stringer (30) to a surface of an aircraft structure (1), wherein the plate is metallic and comprises a first recess (45) formed partially through the thickness of the plate, **characterised by**
the plate being configured so that the thickness of the plate incrementally reduces towards an end of the plate by a plurality of plate steps (51).

2. A securing plate (40) according to claim 1 comprising an upper surface (42) and a lower surface (41), wherein the first recess (45) is formed in the lower surface of the plate.

3. A securing plate (40) according to claim 2 wherein the first recess (45) is formed in the entire lower surface (41) of the plate.

4. A securing plate (40) according to claim 2 or claim 3 comprising a second recess (46) that is formed into the upper surface (42) of the plate.

5. A securing plate (40) according to any preceding claim comprising a slot (47) formed through the thickness of the plate at an end thereof.

6. A securing plate (40) according to claim 5 wherein the slot (47) is located centrally into said edge of the plate.

7. An aircraft structure (1) comprising a skin (20) having an inner surface (21), and a stringer (30) extending in a longitudinal direction of the aircraft structure, the stringer comprising a stringer foot (36) bonded to the skin inner surface and a web (32) extending from the stringer foot and away from the skin inner surface, wherein the aircraft structure further comprises a metallic securing plate (40) overlying a portion of the stringer foot at an end of the stringer and which is attached to the skin, the metallic securing plate comprising a first recess (45) formed partially through the thickness of the plate, **characterised by**
the plate being configured so that the thickness of the plate incrementally reduces towards an end of the plate by a plurality of plate steps (51).

8. An aircraft structure (1) according to claim 7 wherein the securing plate (40) is configured as defined in any claims 1 - 6.

9. An aircraft structure (1) according to claim 7 or claim 8 wherein the securing plate (40) is attached to the stringer foot (36).

10. An aircraft structure (1) according to any of claims 7 - 9 wherein the securing plate (40) overlies the stringer foot (36) and the skin inner surface (21) that is adjacent to the stringer foot.

11. An aircraft structure (1) according to claim 8 or any of claims 9 - 10 when dependent on claim 8, wherein the securing plate (40) is positioned so that a portion of the stringer foot (36) is positioned in the first recess (45).

12. An aircraft structure (1) according to any claims 7- 11 wherein the stringer foot (36) comprises a plurality of laminated plys of composite material.

13. An aircraft structure (1) according to claim 12 wherein the thickness of the stringer foot (36) decreases towards an end of the stringer foot by incremental reduction in the number of plys, forming a plurality of stringer ply steps (50).

14. An aircraft structure (1) according to claim 13, when dependent on claim 8, configured so that the plurality of ply steps (50) are configured to correspond to the plurality of plate steps (51) of the securing plate (40) so as to interface with the plurality of plate steps when the securing plate is positioned on the stringer foot (36).

15. An aircraft structure (1) according to any of claims 7 - 14 wherein an interfay material is disposed between the securing plate (40) and the stringer foot (36) and/ or the skin inner surface (21).

## Patentansprüche

1. Sicherungsplatte (40) zum Klemmen eines Endes eines Stringers (30) an eine Fläche einer Flugzeugstruktur (1), wobei die Platte metallisch ist und eine erste Vertiefung (45) umfasst, die teilweise durch die Dicke der Platte ausgebildet ist, **dadurch gekennzeichnet, dass** die Platte so beschaffen ist, dass sich die Dicke der Platte zu einem Ende der Platte hin stufenweise mit einer Vielzahl von Plattenstufen (51) verringert.

2. Sicherungsplatte (40) nach Anspruch 1, umfassend eine obere Oberfläche (42) und eine untere Oberfläche (41), wobei die erste Vertiefung (45) in der unteren Oberfläche der Platte ausgebildet ist.

3. Sicherungsplatte (40) nach Anspruch 2, wobei die erste Vertiefung (45) in der gesamten unteren Oberfläche (41) der Platte ausgebildet ist.

4. Sicherungsplatte (40) nach Anspruch 2 oder Anspruch 3, umfassend eine zweite Vertiefung (46), die in der oberen Oberfläche (42) der Platte ausgebildet ist.

5. Sicherungsplatte (40) nach einem der vorherigen Ansprüche, umfassend einen Schlitz (47), der durch die Dicke der Platte an einem Ende davon ausgebildet ist.

6. Sicherungsplatte (40) nach Anspruch 5, wobei der Schlitz (47) mittig in der Kante der Platte angeordnet ist.

7. Flugzeugstruktur (1), umfassend eine Verkleidung (20) mit einer inneren Oberfläche (21) und einen Stringer (30), der sich in einer Längsrichtung der Flugzeugstruktur erstreckt, wobei der Stringer einen Stringerfuß (36), der auf die innere Oberfläche der Verkleidung geklebt ist, und einen Steg (32) umfasst, der sich vom Stringerfuß und weg von der inneren Oberfläche der Verkleidung erstreckt, wobei die Flugzeugstruktur ferner eine metallische Sicherungsplatte (40) umfasst, die einen Abschnitt des Stringerfußes an einem Ende des Stringers überliegt und welche an der Verkleidung angebracht ist, wobei die metallische Sicherungsplatte eine erste Vertiefung (45) umfasst, die teilweise durch die Dicke der Platte ausgebildet ist, **dadurch gekennzeichnet, dass** die Platte so beschaffen ist, dass sich die Dicke der Platte zu einem Ende der Platte hin stufenweise mit einer Vielzahl von Plattenstufen (51) verringert.

8. Flugzeugstruktur (1) nach Anspruch 7, wobei die Sicherungsplatte (40) wie in einem der Ansprüche 1 bis 6 aufgebaut ist.

9. Flugzeugstruktur (1) nach Anspruch 7 oder Anspruch 8, wobei die Sicherungsplatte (40) am Stringerfuß (36) angebracht ist.

10. Flugzeugstruktur (1) nach einem der Ansprüche 7 bis 9, wobei die Sicherungsplatte (40) den Stringerfuß (36) und die innere Oberfläche (21) der Verkleidung, die am Stringerfuß anliegt, überliegt.

11. Flugzeugstruktur (1) nach einem der Ansprüche 9 bis 10, wenn abhängig von Anspruch 8, wobei die Sicherungsplatte (40) so angeordnet ist, dass ein Abschnitt des Stringerfußes (36) in der ersten Vertiefung (45) angeordnet ist.

12. Flugzeugstruktur (1) nach einem der Ansprüche 7 bis 11, wobei der Stringerfuß (36) eine Vielzahl von geschichteten Lagen eines Verbundmaterials umfasst.

13. Flugzeugstruktur (1) nach Anspruch 12, wobei sich die Dicke des Stringerfußes (36) zu einem Ende des Stringerfußes hin durch stufenweise Verringerung der Anzahl der Lagen verringert, eine Vielzahl von Stringerlagenstufen (50) bildend.

14. Flugzeugstruktur (1) nach Anspruch 13, wenn abhängig von Anspruch 8, so beschaffen, dass die Vielzahl von Lagenstufen (50) so beschaffen sind, dass sie mit der Vielzahl von Plattenstufen (51) der Sicherungsplatte (40) so korrespondieren, dass sie sich an die Vielzahl von Plattenstufen ankoppeln, wenn die Sicherungsplatte am Stringerfuß (36) angeordnet ist.

15. Flugzeugstruktur (1) nach einem der Ansprüche 7 bis 14, wobei ein Flächenverbindungsmaterial zwischen der Sicherungsplatte (40) und dem Stringerfuß (36) und/oder der inneren Oberfläche (21) der Verkleidung angeordnet ist.

## Revendications

1. Plaque de fixation (40) destinée à la fixation d'une extrémité d'un longeron (30) sur une surface d'une structure d'aéronef (1), la plaque étant en métal et comprend un premier renfoncement (45) formé partiellement à travers l'épaisseur de la plaque, **caractérisée en ce que** la plaque est configurée **en ce que** l'épaisseur diminue progressivement en direction d'une extrémité de la plaque par une pluralité de marches de plaque (51).

2. Plaque de fixation (40) suivant la revendication 1, la plaque comprenant une surface supérieure (42) et une surface inférieure (41), le premier renfoncement (45) étant formé dans la surface inférieure de la plaque.

3. Plaque de fixation (40) suivant la revendication 2, plaque, dont le premier renfoncement (45) est formé dans l'ensemble de la surface inférieure (41) de la plaque.

4. Plaque de fixation (40) suivant la revendication 2 ou 3, la plaque comprenant un second renfoncement (46) qui est formé dans la surface supérieure (42) de la plaque.

5. Plaque de fixation (40) suivant l'une des revendications précédentes, la plaque comprenant une fente (47) formée à travers l'épaisseur de la plaque, à une extrémité de celle-ci.

6. Plaque de fixation (40) suivant la revendication 5, plaque, dont la fente (47) est située au centre dudit bord de la plaque.

7. Structure d'aéronef (1) comprenant un revêtement (20) ayant une surface interne (21) et un longeron (30) s'étendant dans une direction longitudinale de la structure d'aéronef, le longeron comprenant un pied de longeron (36) collé à la surface interne de revêtement et une toile (32) s'étendant du pied de longeron en s'éloignant de la surface interne de revêtement, la structure d'aéronef comprenant, en plus, une plaque de fixation métallique (40) recouvrant une partie du pied de longeron à une extrémité du longeron et étant fixée au revêtement, la plaque de fixation métallique comprenant un premier renfoncement (45) formé partiellement à travers l'épaisseur de la plaque, **caractérisée en ce que** la plaque est configurée **en ce que** l'épaisseur diminue progressivement en direction d'une extrémité de la plaque par une pluralité de marches de plaque (51).

8. Structure d'aéronef (1) suivant la revendication 7, dans laquelle la plaque de fixation (40) est configurée telle que définie dans une des revendications 1 à 6.

9. Structure d'aéronef (1) suivant la revendication 7 ou 8, dans laquelle la plaque de fixation (40) est fixée au pied du longeron (36).

10. Structure d'aéronef (1) suivant la revendication 7 à 9, dans laquelle la plaque de fixation (40) recouvre le pied du longeron (36) et la surface interne de revêtement (21) qui est adjacente au pied du longeron.

11. Structure d'aéronef (1) suivant la revendication 8 ou une des revendications 9 à 10, dans la mesure où celle-ci est dépendante de la revendication 8, dans laquelle la plaque de fixation (40) est positionnée en ce qu'une partie du pied du longeron (36) soit positionnée dans le premier renfoncement (45).

12. Structure d'aéronef (1) suivant une des revendications 7 à 11, dans laquelle le pied du longeron (36) comprend une pluralité de couches stratifiées en un matériau composite.

13. Structure d'aéronef (1) suivant la revendication 12, dans laquelle l'épaisseur du pied de longeron (36) décroît en direction d'une extrémité du pied de longeron par diminution progressive du nombre de couches stratifiées formant, ainsi, une pluralité de marches de couches stratifiées (50).

14. Structure d'aéronef (1) suivant la revendication 13, dans la mesure où celle-ci est dépendante de la revendication 8, la structure étant configurée en ce que la pluralité de marches de couches stratifiées (50) soit configuré de manière à correspondre à la pluralité de marches (51) de la plaque de fixation (40) de manière à constituer une interface avec la pluralité de marches (51) de la plaque de fixation (40), lorsque celle-ci est positionnée sur le pied de longeron (36).

15. Structure d'aéronef (1) suivant l'une des revendications 7 à 14, dans laquelle un matériau d'interface est disposé entre la plaque de fixation (40) et le pied de fixation (36) et/ou la surface interne de revêtement (21).
